# EUROPEAN PATENT APPLICATION

(11) **EP 4 464 172 A1**
(43) Date of publication of application: **20.11.2024**
(21) Application number: 24176124.6
(22) Date of filing: 15.05.2024
(51) Int. Cl.: A23L 17/00

(54) **A METHOD FOR PRODUCING A FOOD PRODUCT**

(30) Priority: 17.05.2023 IT 202300009987
(71) Applicant: Foodlab S.r.l., 43016 Polesine Zibello (PR) (IT)
(72) Inventor: GHILARDOTTI, Gianpaolo, 43019 SORAGNA (PR) (IT)
(74) Representative: Monelli, Alberto

(57) **Abstract**

A method for producing a food product, comprising the steps of:
- removing waste meat (20) from salmon fillets (21) placed on a line (2) for processing said fillets (21); said line (2) for processing the fillets (21) purified from the waste meat (20) being intended to obtain pieces of salmon intended for human consumption;
- joining said waste meat (20) with at least one food fibre (31) obtaining a mixture (30);
- obtaining single portions (40) of food products from said mixture (30); said single portions (40) being intended for human consumption;
- positioning together a plurality of said single portions (40) in a single package (70).

## Description

The present invention relates to a method for producing a food product, namely a salmon-based finger food snack.

Currently, salmon is typically served as smoked salmon slices, in C-shaped slices, in the classic cut used in sushi.

In the production of the above-mentioned cuts, there is production waste which is not intended for human consumption. In fact, the darker portions (typically grey and different from the pinkish colour of the surrounding flesh) are removed from the salmon fillet obtained by filleting (removing the bones as well as the head and tail) and possibly skinning. Such darker portions are discarded and not used for human consumption.

The object of the present invention is to propose a method which allows to provide finger food-type protein snacks which allows the nutritional principles of salmon to be exploited to the fullest while avoiding unnecessary food waste.

The technical task set and the objects specified are substantially attained by a method comprising the technical features as set out in one or more of the appended claims.

Further features and advantages of the present invention will become more apparent from the following indicative and therefore non-limiting description of a method as schematically illustrated in the appended figures, in which:
- figure 1 shows a schematic implementation view of the method according to the present invention;
- figures 2 and 3 show details of elements involved in the method according to the present invention.

The subject matter of the present invention is a method for producing a food product. Such a method comprises the step of removing waste meat 20 from salmon fillets 21 placed on a line 2 for processing said fillets 21. The line 2 for processing the fillets 21 purified from the waste meat 20 is aimed at obtaining pieces of salmon intended for human consumption. For example, such pieces of salmon could be slices of salmon (e.g., smoked or au natural). Fillet is intended as the half-carcase of the salmon, filleted along the bone and usually devoid of head, tail and skin.

The step of removing waste meat 20 comprises the step of removing a portion of meat from the fillets 21 which is typically located in a central area of the fillets and is appropriately darker relative to the meat in the surrounding areas. Such waste meat 20 has a colour deviation relative to the pinkish neighbouring areas. Typically, the waste meat 20 is grey in colour, in particular dark grey. Along with the grey portion, however, fragments of pink meat could also be removed. Appropriately, the waste meat 20 is removed from the fillets by means of manual or electric knives of a known type. The waste meat 20 is appropriately well known in the technical field as 'dark meat'.

Therefore, to summarise, the method envisages obtaining pieces of salmon from the conventional processing line 2 (such pieces can be of various types or kinds, e.g., a slice, slices of salmon for smoking, pieces for sushi, etc.). In addition, the waste meat 20 is taken from the processing line 2. Such waste meat 20 is reused for human consumption by applying the steps of the present method. A line for the reuse of the waste meat 20 then branches off from the conventional line 2.

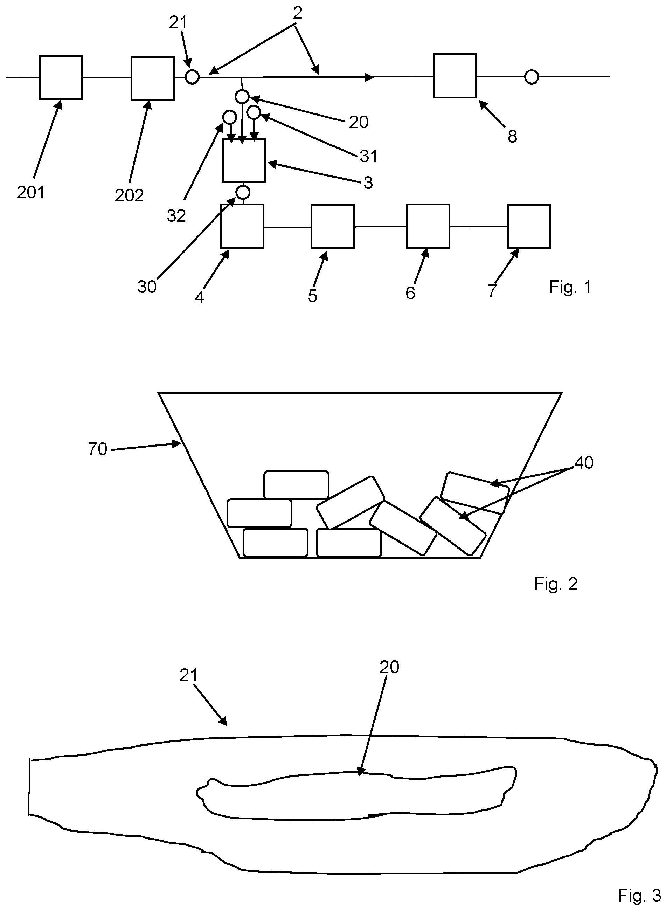

The above is schematically shown by way of example in figure 1, in which the processing line 2 can comprise a fish filleting machine 201. Downstream of the filleting machine 201, two fillets are obtained from a single fish. Downstream, there is appropriately a skin stripper 202 which removes the outer skin from the fillets. Along the processing line 2, the waste meat 20 is removed downstream of the filleting machine 201.

The fillets 21 will then continue their processing along the processing line 2 (operations schematically represented and summarised by module 8 in figure 1).

The method further comprises the step of joining the waste meat 20 with at least one food fibre 31, obtaining a mixture 30. Said at least one food fibre 31 comprises at least one vegetable fibre. Appropriately, such a vegetable fibre comprises citrus fibre and/or prebiotics, appropriately inulin.

Appropriately, the method comprises the step of mincing the waste meat 20 before using it to make the mixture 30. In practice, it is minced before combining it with said at least one fibre. Alternatively, the step of mincing the meat 20 occurs at the same time as the step of obtaining the mixture 30.

The step of joining the waste meat 20 with at least one food fibre 31 advantageously occurs in a mixer 3. The mixture 30 also contains salt 32. Such a combination envisages obtaining a compact mass for the mixture 30 while simultaneously minimising the salt content. It also allows the final product to be stored for several hours, even outside the fridge. Appropriately, pieces of salmon meat (e.g., minced and/or in the form of shreds) can also be introduced in the mixer 30. Appropriately, no ingredients are added after the mixer 30.

In the preferred solution, the mixture 30 is obtained from the following ingredients, in particular it is obtained exclusively from the following ingredients:
- waste meat 20 (40-60% by weight)
- chopped pieces of salmon meat and/or in the form of shreds (30-50% by weight);
- fibre (2-5%); e.g., citrus fibre and inulin.
- salt (less than 1% by weight).

A particular example could be the following:

| | |
|---|---|
| Salar dark meat | 50.76 % |
| Minced Sockeye | 15.23 % |
| Salar shredded meat | 30.46 % |
| Citrus fibre | 2.03 % |
| Inulin | 1.02 % |
| Sale | 0.51 % |

The chopped pieces of salmon meat and/or in the form of shreds can be of one or more types of salmon.

The method envisages the step of obtaining single portions 40 of food products from the mixture 30. The single portions 40 are intended for human consumption.

The step of obtaining single portions 40 comprises the sub-steps of:
- extruding the mixture 30 by means of an extruder 4;
- cutting segments of a portion extruded by the extruder 4, obtaining said single portions 40.

Appropriately, no new ingredients are added after the step of extruding the mixture by means of the extruder 4. Appropriately, to produce the single portions, there are no more extrusions in subsequent stations arranged in series. Appropriately, the extrusion occurs in one station in order to produce the single portions.

The single portions 40 are for example less than 3.5 centimetres long. Appropriately, the single portions have a cross-section orthogonal to the length of less than 2.5 cm².

In particular, the single portions 40 can be comprised between 2.5 and 3.5 centimetres long. They also have a cross-section orthogonal to the length, preferably comprised between 1 and 2.5 cm².

The method further comprises the step of positioning placing a plurality of said single portions 40 together, in a single package 70 (see figure 2). Appropriately, this occurs in a station 7. Such a package 70 is typically a tray. In particular, the tray is made of plastic. The tray advantageously has a film obstructing an opening in the tray itself. Appropriately, the film is heat-sealed to a peripheral edge of the opening. A conditioned atmosphere may be present inside the package 70.

Appropriately, the method comprises the step of drying said single portions 40 in a first drying oven 5. The step of drying in the first oven 5 occurs between the step of obtaining the single portions 40 and the step of positioning a plurality of the single portions 40 together in a single package 70.

Optionally, the method comprises the step of performing a smoking of said single portions 40 in a second oven 6. The step of performing a smoking taking place between the step of drying in the first oven 5 and the step of positioning together a plurality of said single portions 40 in a single package 70.

Appropriately, the method does not envisage freezing or deep-freezing the single portions. Appropriately, the single portions are a homogeneous product (in particular, there is no surface battering).

An object of the present invention is also a package of finger food single portions. Such a package is made with a method having one or more of the features described previously.

The present invention achieves important advantages.

Firstly, it allows to provide a finger-food type protein snack using waste meat rich in nutritional substances (such meat is considered waste because it looks less aesthetically pleasing within the original fillet). This allows to optimise the use of salmon meat, which is a valuable product. Furthermore, packaging in finger-food single portions is important, as such a format facilitates the disposal of waste product as it is possible to reconstitute a compact product which can be manipulated by the operator starting from scraps and offcuts which have irregular shapes and are more difficult to handle.

The invention thus conceived is susceptible to numerous modifications and variants, all falling within the scope of the inventive concept that characterises it. Furthermore, all the details may be replaced with other technically equivalent elements. All the materials used, as well as the dimensions, may in practice be any whatsoever according to needs.

## Claims

1. A method for producing a food product, comprising the steps of:
- removing waste meat (20) from salmon fillets (21) placed on a line (2) for processing said fillets (21); said line (2) for processing the fillets (21) purified from the waste meat (20) being intended to obtain pieces of salmon intended for human consumption;
- joining said waste meat (20) with at least one food fibre (31) obtaining a mixture (30);
- obtaining single portions (40) of food products from said mixture (30); said single portions (40) being intended for human consumption;
- positioning together a plurality of said single portions (40) in a single package (70).

2. The method according to claim 1, **characterized in that** the step of removing waste meat (20) comprises the step of removing from the fillets (21) a portion of meat that is darker than the meat of the neighbouring areas.

3. The method according to claim 1 or 2, **characterized in that** the step of removing waste meat (20) comprises the step of removing from a central portion of the fillets (21) a portion of meat that is darker than the meat of the neighbouring areas.

4. The method according to any one of the preceding claims, **characterized in that** the step of obtaining single portions (40) comprises the sub-steps of:
- extruding the mixture (30) by means of an extruder (4);
- cutting segments of a portion extruded by the extruder (4) obtaining said single portions (40).

5. The method according to any one of the preceding claims, **characterized in that** said single portions (40) have a length of less than 3 centimetres and section, orthogonal to the length, less than 2.5 cm².

6. The method according to any one of the preceding claims, **characterized in that** the step of joining said waste meat (20) with at least one food fibre (31) envisages joining the waste meat (20) with at least one vegetable fibre (31) and salt (32).

7. The method according to claim 6, **characterized in that** said mixture (30) comprises more than 40% by weight of said waste meat (20).

8. The method according to any one of the preceding claims, **characterized in that** it comprises performing a drying of said single portions (40) in a first drying oven (5); said step of performing a drying in the first oven (5) taking place between the step of obtaining the single portions (40) and the step of positioning together a plurality of the single portions (40) in a single package (70).

9. The method according to claim 8, **characterized by** performing a smoking said single portions (40) in a second oven (6); the step of performing a smoking taking place between the step of drying in the first oven (5) and the step of positioning together a plurality of said single portions (40) in a single package (70).

10. A package of finger food single portions made with a method according to any one of claims 1 to 9.
